# EUROPÄISCHE PATENTANMELDUNG

(11) **EP 1 717 488 A2**
(43) Veröffentlichungstag der Anmeldung: **02.11.2006**
(21) Anmeldenummer: 06012831.1
(22) Anmeldetag: 15.05.2003
(51) Int. Cl.: F16H 57/02, F16H 1/14

(54) **Kegelradgetriebe, insbesondere Hypoidgetriebe**

(30) Priorität: 30.07.2002 DE 10234749
(62) Teilanmeldung aus: 03732385.4
(71) Anmelder: Wittenstein AG, 97999 Igersheim (DE)
(72) Erfinder: Melber, Karl-Georg, 97990 Weikmersheim-Elpersheim (DE); Engelbreit, Michael, 97283 Riedenheim (DE)
(74) Vertreter: Weiss, Peter

(57) **Zusammenfassung**

Bei einem Kegelradgetriebe, insbesondere Hypoidgetriebe mit einer in einem Gehäuse (1) gelagerten Abtriebswelle (3), welcher ein Kegelrad (7) zugeordnet ist, welches mit einem Antriebskegelrad (8) zusammenwirkt, soll die Abtriebswelle (3) einen Abtriebsflansch (23) zum Adaptieren von Abtriebselementen aufweisen.

## Beschreibung

Die Erfindung betrifft ein Kegelradgetriebe, insbesondere Hypoidgetriebe mit einer in einem Gehäuse gelagerten Abtriebswelle, welcher ein Kegelrad zugeordnet ist, welches mit einem Antriebskegelrad zusammenwirkt.

Derartige Kegelradgetriebe, insbesondere Hypoidgetriebe sind in vielfältiger Form und Ausführung auf dem Markt bekannt und gebräuchlich. Sie dienen insbesondere zur Drehmomentenumlenkung von beispielsweise 90°, wobei auch andere Bereiche der Umlenkung im Rahmen der vorliegenden Erfindung liegen sollen.

Nachteilig ist bei herkömmlichen Getrieben, dass diese für unterschiedliche kundenspezifische Wünsche jeweils neu konzipiert und ausgelegt werden müssen. Insbesondere sind kundenspezifische Wünsche beispielsweise unterschiedliche Antriebsmuffen, Antriebswellen, unterschiedliche Übersetzungen, unterschiedliche Aufnahme für Abtriebselemente od. dgl..

Aufgrund der kundenspezifischen Vielfalt werden herkömmliche hypoidgetriebe in unterschiedlichsten Varianten hergestellt. Dies ist fertigungstechnisch sehr teuer und aufwendig.

Der vorliegenden Erfindung liegt die Aufgabe zugrunde, ein Kegelradgetriebe, insbesondere ein Hypoidgetriebe zu schaffen, welches die genannten Nachteile beseitigt und mit welchem auf sehr kostengünstige und einfache Weise mit Standardbauteilen ein Kegelradgetriebe ausgeführt werden kann, an welches kundenspezifisch, beispielsweise beliebige Abtriebselemente oder Antriebselemente modular anschliessbar sind. Hierdurch sollen die Fertigungskosten gesenkt werden, wobei gleichzeitig die Flexibilität des Kegelradgetriebes erhöht werden soll.

Zur Lösung dieser Aufgabe führen die Merkmale des Patentanspruches 1 sowie die Merkmale der nebengeordneten Ansprüche 2 bis 4.

Bei der vorliegenden Erfindung ist besonders vorteilhaft, an die Hypoidstufe über einen Flansch ein ein- oder mehrstufiges Getriebe oder eine beliebige dimensionierte Antriebswelle modular anzuschliessen. Entsprechende kundenspezifische Dimensionierungen der Antriebswelle, beispielsweise hinsichtlich Durchmesser, Länge etc., welche vorzugsweise in einer Baugruppe untergebracht ist, können somit berücksichtigt werden, ohne dass die Hypoidstufe verändert werden muss. Hierzu ist lediglich erforderlich, dass die Baugruppe, die die Antriebswelle enthält, kundenspezifiziert werden muss, so dass das verbleibende Kegelradgetriebe für unterschiedliche Antriebswellen bzw. Baugruppen eingesetzt und verwendet werden kann.

Dabei lässt sich die Baugruppe, enthaltend die Antriebswelle, sehr schnell und leicht mit dem Kegelradgetriebe austauschen oder durch ein ein- oder mehrstufiges Getriebe ersetzen.

Dies hat auch den Vorteil, dass beispielsweise im Reparaturfall lediglich beispielsweise das ein- oder mehrstufige Getriebe von dem Kegelradgetriebe bzw. der Hypoidstufe abgeflanscht oder ausgetauscht werden muss, sollte dieses beispielsweise beschädigt sein. Zudem lässt sich kundenspezifisch ein Kegelradgetriebe realisieren, welches antriebsseitig und abtriebsseitg beliebige Möglichkeiten aufweist.

Ferner hat sich als vorteilhaft erwiesen, dass insbesondere die Baugruppe sowie das verbleibende Kegelradgetriebe in unterschiedliche Schmierräume unterteilt ist, so dass mit unterschiedlichen Schmiermitteln einerseits gearbeitet werden kann und andererseits ein Austausch der Baugruppen zwischen Kegelradgetriebe, beispielsweise ein ein- oder mehrstufiges Getriebe bzw. Antriebswelle jederzeit leicht und schnell möglich ist, ohne dass auf die Schmiermittel sowie deren Befüllzustände Rücksicht genommen werden muss.

Zudem hat sich als vorteilhaft bei der vorliegenden Erfindung erwiesen, die Abtriebswelle an zumindest einem stirnseitigen Bereich als Abtriebsflansch auszubilden, um unterschiedliche Abtriebselemente aufzunehmen. Zudem ist von Vorteil bei der vorliegenden Erfindung, dass beispielsweise direkt aus einem Teil der Abtriebswelle eine Schulter oder ein Absatz gebildet ist, um das Hauptlager aufzunehmen.

Gleichzeitig kann jedoch auch aus dem Kegelrad eine Schulter ausgebildet sein, um das Hauptlager der Abtriebswelle aufzunehmen.

Ein weiterer Vorteil bei der vorliegenden Erfindung ist, dass Kegelrad und Abtriebswelle zweiteilig, insbesondere wiederlösbar miteinander verbindbar ausgebildet sind, so dass eine Montage ggf. auch eine Reparatur wesentlich erleichtert ist. Zudem wird gewährleistet, dass eine äusserst geringe Baulänge durch diese Bauweise realisiert ist. Durch die zweiteilige Ausführung von Kegelrad und Abtriebswelle und durch die Lagerung des Hauptlagers auf der Schulter der Abtriebswelle können gleich gross dimensionierte Hauptlager verwendet und eingesetzt werden, so dass insgesamt die Stabilität und die Lebensdauer bei Reduktion der Teilevielfalt optimiert ist. Dies soll ebenfalls im Rahmen der vorliegenden Erfindung liegen.

Ferner lässt sich bei der vorliegenden Erfindung ein Kegelradgetriebe realisieren, dessen Übersetzungsverhältnisse bei reduzierter Baulänge von beispielsweise 1 zu 10 wählbar ist, wobei dies auch erreicht werden kann, in dem der Hypoidstufe bzw. dem Kegelradgetriebe ein ein- oder mehrstufiges Getriebe vorgeschaltet ist. Dieses ist ebenfalls sehr leicht austauschbar.

Hierdurch können unterschiedliche kundenspezifische Kegelradgetriebe realisiert werden, die mit wenigen Veränderungen und Modifizierungen kundengerecht hergestellt werden können.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 einen schematisch dargestellten Längsschnitt durch ein Kegelradgetriebe, insbesondere Hypoidgetriebe mit aufgesetztem ein- oder mehrstufigem Getriebe;
Figur 2 einen Teillängsschnitt durch ein Kegelradgetriebe als weiteres Ausführungsbeispiel;
Figur 3 einen schematisch dargestellten Längsschnitt durch ein weiteres Ausführungsbeispiel eines weiteren Kegelradgetriebes gemäss den Figuren 1 und 2.

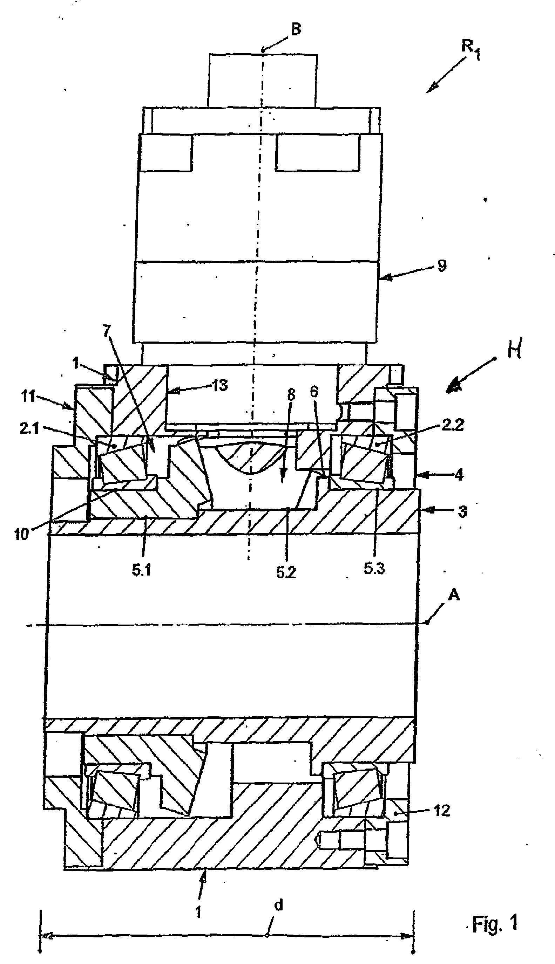

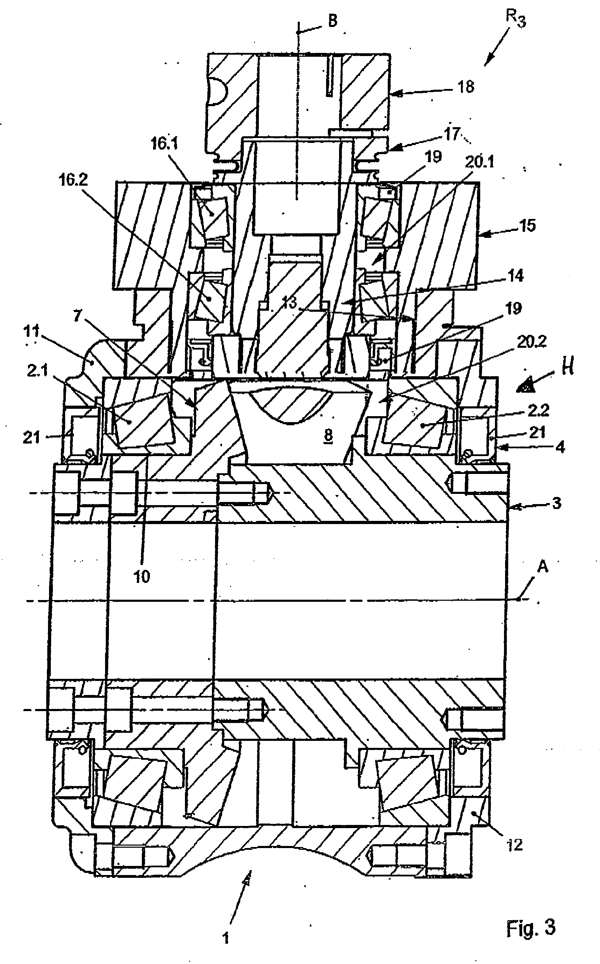

Gemäss den Figuren 1 und 3 weist ein erfindungsgemässes Kegelradgetriebe R₁ ein Gehäuse 1 auf, in welchem zwei Hauptlager 2.1, 2.2 zueinander beabstandet jeweils in stirnseitigen Bereichen gelagert sind und innerhalb des Gehäuses 1 eine Durchgangsöffnung 4 vorgesehen ist, in welcher die Abtriebswelle 3 eingesetzt ist.

Die Abtriebswelle 3 ist mit einer Mehrzahl von unterschiedlichen Wellenabsätzen 5.1 bis 5.3 versehen. Zwischen den Wellenabsätzen 5.2 und 5.3 ist ein Anschlag 6 zur einseitigen Lagerung des Hauptlagers 2.2 vorgesehen. Auf dem Wellenabsatz 5.3 der Abtriebswelle 3 sitzt das Hauptlager 2.2.

Auf dem Wellenabsatz 5.1 sitzt ein Kegelrad 7 verdrehfest der Abtriebswelle 3 auf. Über entsprechende Wellen-Nabenverbindungen, Keilwellenverbindungen oder durch Schrumpfsitze kann das Kegelrad 7 verdrehfest mit der Abtriebswelle 3 verbunden sein und lässt sich über ein entsprechendes Antriebskegelrad 8, welches hier nur angedeutet ist, antreiben und versetzt die Abtriebswelle 3 um die Achse A in eine Drehbewegung.

Das Antriebskegelrad 8 sitzt im vorliegenden Ausführungsbeispiel einem ein- oder mehrstufigen Getriebe 9 auf und ist über das Getriebe 9 um die Achse B verdrehbar gelagert.

Von Vorteil ist bei der vorliegenden Erfindung, um eine möglichst geringe Baulänge L zu erhalten, dass aus dem Kegelrad 7 eine Schulter 10 gebildet ist, auf welcher das Hauptlager 2.1 aufsitzt bzw. zwischen Schulter 10 und Gehäuse 1 das Hauptlager 2.1 eingesetzt ist und eine radiale und/oder axiale Lagerung der Abtriebswelle 3 gewährleistet. Zur axialen Sicherung des Hauptlagers 2.1 dient ein Abschlussdeckel 11 einends der Durchgangsöffnung 4 bzw. einends der Abtriebswelle 3.

Andernends im Bereich des Hauptlagers 2.2 ist ein Lagerdeckel 12 vorgesehen, der ebenfalls das Hauptlager 2.2 im Bereich des Gehäuses 1 axial sichert, wobei das Hauptlager 2.2 gegenüber dem Anschlag 6 auf dem Wellenabsatz 5.3 gehalten ist.

Auf diese Weise ist eine sehr einfache Montage bei äusserst geringer Baulänge L realisiert, so dass über die Hauptlager 2.1, 2.2 die Abtriebswelle 3 innerhalb des Gehäuses 1 axial eingespannt und radial verdrehbar gelagert ist. Durch die Zusammenlegung von Hauptlager 2.1 auf dem Kegelrad 7 ist ein Kegelradgetriebe realisiert, welches hohen Beanspruchungen standhält und gleichzeitig stark dimensionierte Hauptlager 2.1 und 2.2 bei reduzierter Baulänge L zulässt.

Zudem ist eine Montage, insbesondere Demontage beispielsweise bei Reparatur erleichtert, in dem lediglich Abschlussdeckel 11 sowie Lagerdeckel 12 stirnseitig des Gehäuses 1 entnommen werden müssen, um anschliessend die Hauptlager 2.1 bzw. 2.2 zu entnehmen bzw. abzuziehen, so dass dann die Abtriebswelle 3 mit oder ohne Kegelrad 7, je nach Verbindung aus der Durchgangsöffnung 4 entnommen werden kann.

Es ist auch denkbar, sollte lediglich das Kegelrad 7 ausgetauscht werden, dass durch Öffnen des Abschlussdeckels 11, Abziehen des Hauptlagers 2.1 sich das Kegelrad 7 vom Wellenabsatz 5.1 einfach abziehen lässt.

Ferner hat sich als vorteilhaft bei dem vorliegenden Ausführungsbeispiel erwiesen, dass der hier Hypoidstufe H des Kegelradgetriebes R₁ ein ein- oder mehrstufiges Getriebe 9 mit einem Flansch 13 mit ggf. Antriebskegelrad 8 schnell und wiederlösbar verbindbar ist, wobei auch daran gedacht sein kann, anstelle des Getriebes 9 in ein und denselben Flansch 13 eine beliebige Antriebswelle 14 mit ggf. Antriebskegelrad 8, siehe Figur 3, einzusetzen.

Dabei kann ein und derselbe Flansch 13 universell dazu dienen, das Getriebe 9 oder jede beliebige Antriebswelle 14 aufzunehmen, so dass auf diese Weise eine modulare Bauweise geschaffen ist. Es können anwenderspezifische unterschiedlich dimensionierte Antriebswellen 14 oder Getriebe 9 mit ggf. unterschiedlichen Übersetzungen eingesetzt werden. Dies soll ebenfalls im Rahmen der vorliegenden Erfindung liegen.

Ferner ist wichtig bei der vorliegenden Erfindung, dass, wie es insbesondere in dem Ausführungsbeispiel der vorliegenden Erfindung gemäss Figur 3 aufgezeigt ist, die Antriebswelle 14 eines Kegelradgetriebes R₃ beispielsweise als Baugruppe 15 in den Flansch 13 eingesteckt werden kann, wobei die Baugruppe 15 Lagerelemente 16.1, 16.2 aufweist, welche die Antriebswelle 14 lagern, an welche eine hier angedeutete Kupplung 17 mit Anschlussmuffe 18 für ein beliebiges Antriebselement anschliesst.

Ausserhalb der Lagerelemente 16.1, 16.2 sind Dichtelemente 19 vorgesehen, die die Baugruppe 15 zum Antriebskegelrad 8 sowie zur Kupplung 17 hin nach aussen abdichten, wobei ein erster Schmierraum 20.1 gebildet ist. Dieser Schmierraum 20.list unabhängig von einem zweiten Schmierraum 20.2, der begrenzt wird über weitere Dichtelemente 21, zwischen Gehäuse 1 und Abtriebswelle 3 bzw. Kegelrad 7, insbesondere zwischen Abschlussdeckel 11 und Kegelrad 7 bzw. Abtriebswelle 3 und Lagerdeckel 12.

Auf diese Weise entstehen getrennte Schmierräume 20.1 und 20.2, so dass unterschiedliche Schmiermittel im Wirkbereich vom Kegelrad 7 und Antriebskegelrad 8 sowie im Bereich der Antriebswelle 14 verwendet werden können.

Zudem ist durch diese Anordnung lageunabhängig immer eine permanente Schmierung auch der Antriebswelle 14 gewährleistet. Zudem gewährleisten die separaten Schmierräume, dass mit unterschiedlichen Schmiermitteln, Schmierfetten oder unterschiedlichen Schmierölen die Antriebswelle 3 sowie Kegelrad 7 oder Antriebskegelrad 8 betrieben werden können.

Auf diese Weise können in den Schmierräumen 20.1, 20.2 auch unterschiedliche anwenderspezifische oder belastungsspezifische Schmiermittel eingesetzt werden.

Zudem ist von Vorteil, dass ein Austauschen der Baugruppe 15 vom Kegelradgetriebe R₁ bis R₃ sehr leicht und schnell ohne weiteres erfolgen kann.

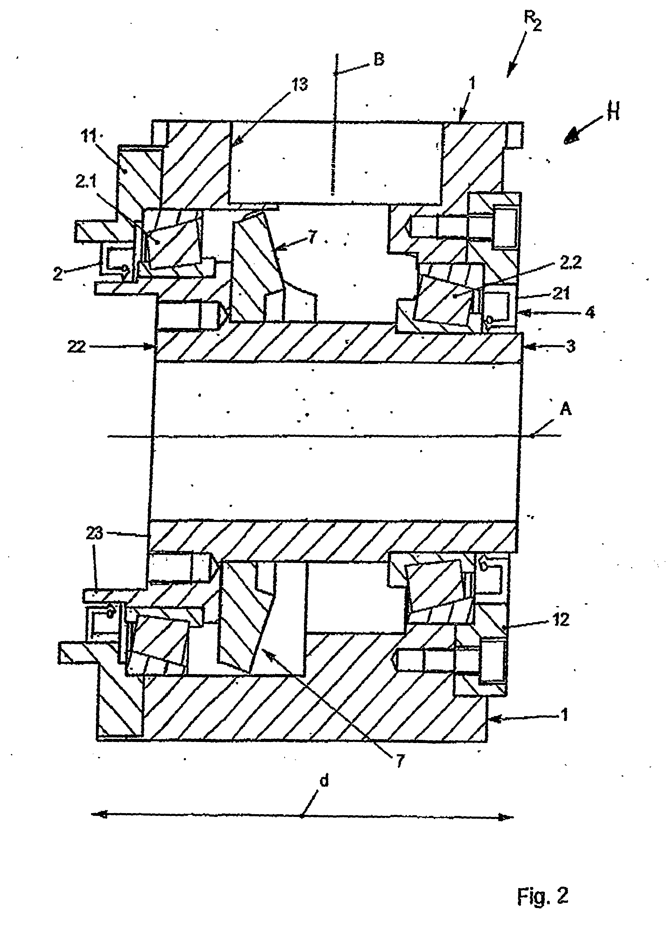

In dem Ausführungsbeispiel der vorliegenden Erfindung gemäss Figur 2 ist ein Kegelradgetriebe R₂ aufgezeigt, welches in etwa dem gemäss Figur 1 entspricht. Unterschiedlich ist, dass die Abtriebswelle 3 einen endseitigen Absatz aufweist, welchem das Hauptlager 2.1 aufsitzt. In einem stirnseitigen Bereich 22 ist die Abtriebswelle 3 als Abtriebsflansch 23 zum Montieren von beliebigen hier nicht dargestellten Antriebselementen ausgebildet. Dabei ist die Abtriebswelle 3.1 ebenfalls stufig unterteilt, um einerseits das Hauptlager 2.2 aufzuschieben und in einem mittleren Bereich das Kegelrad 7 formschlüssig oder kraftschlüssig mit der Abtriebswelle 3 zu verbinden.

Eine weitere Besonderheit der vorliegenden Erfindung liegt auch darin, dass der stirnseitige Bereich , 22 des Abtriebsflansches 23 innerhalb des Abschlussdeckels 11 eingelassen ist, so dass insgesamt eine Baulänge L des Kegelradgetriebes R₂ reduziert ist. Zudem können beliebige Antriebselemente leicht und einfach angeflanscht werden.

In Figur 3 ist ein Kegelradgetriebe R₃ aufgezeigt, bei welchem Kegelrad 7 und Abtriebswelle 3 zweiteilig miteinander verbunden, insbesondere miteinander verschraubt sind. Um eine radiale Zentrierung zu gewährleisten, ist zwischen Kegelrad 7 und Abtriebswelle 3 stirnseitig ein ineinandergreifender Absatz 24 gebildet. Durch die zweiteilige Ausführung ist eine Montage, Demontage, sowie eine Fertigung erleichtert.

**Positionszahlenliste**

| | | | | | |
|---|---|---|---|---|---|
| 1 | Gehäuse | 34 | | 67 | |
| 2 | Hauptlager | 35 | | 68 | |
| 3 | Abtriebswelle | 36 | | 69 | |
| 4 | Durchgangsöffnung | 37 | | 70 | |
| 5 | Wellenabsatz | 38 | | 71 | |
| 6 | Anschlag | 39 | | 72 | |
| 7 | Kegelrad | 40 | | 73 | |
| 8 | Antriebskegelrad | 41 | | 74 | |
| 9 | Getriebe | 42 | | 75 | |
| 10 | Schulter | 43 | | 76 | |
| 11 | Abschlussdeckel | 44 | | 77 | |
| 12 | Lagerdeckel | 45 | | 78 | |
| 13 | Flansch | 46 | | 79 | |
| 14 | Antriebswelle | 47 | | | |
| 15 | Baugruppe | 48 | | | |
| 16 | Lagerelement | 49 | | | |
| 17 | Kupplung | 50 | | | |
| 18 | Anschlussmuffe | 51 | | R₁ | Kegelradgetriebe |
| 19 | Dichtelement | 52 | | R₂ | Kegelradgetriebe |
| 20 | Schmierraum | 53 | | R₃ | Kegelradgetriebe |
| 21 | Dichtelement | 54 | | | |
| 22 | stirnseitig. Bereich | 55 | | A | Achse |
| 23 | Abtriebsflansch | 56 | | B | Achse |
| 24 | | 57 | | | |
| 25 | | 58 | | L | Baulänge |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Kegelradgetriebe, insbesondere Hypoidgetriebe mit einer in einem Gehäuse (1) gelagerten Abtriebswelle (3), welcher ein Kegelrad (7) zugeordnet ist, welches mit einem Antriebskegelrad (8) zusammenwirkt,
**dadurch gekennzeichnet,**
**dass** die Abtriebswelle (3) einen Abtriebsflansch (23) zum Adaptieren von Abtriebselementen aufweist.

2. Kegelradgetriebe nach Anspruch 1, **dadurch gekennzeichnet, dass** einer Hypoidstufe (H) ein unterschiedlich dimensioniertes ein- oder mehrstufiges Getriebe (9) modular einsteckbar vorgeschaltet ist, wobei das Antriebskegelrad (8) dem ein- oder mehrstufigen Getriebe (9) aufsitzt und das Kegelrad (7) der Abtriebswelle (3) kämmt.

3. Kegelradgetriebe nach Anspruch 1 oder 2, **dadurch gekennzeichnet, dass** ein Bereich der Antriebeeinheit und ein Bereich des daran anschliessenden Hypoidgetriebes in voneinander unabhängige Schmierräume (24.1, 20.2) unterteilt sind.

4. Kegelradgetriebe nach wenigstens einem der Ansprüche 1 bis 3, **dadurch gekennzeichnet, dass** Abtriebswelle (3) und Kegelrad (7) zweiteilig miteinander verbindbar in einer Achse (A, B) angeordnet sind.

5. Kegelradgetriebe nach wenigstens einem der Ansprüche 1 bis 4, **dadurch gekennzeichnet, dass** in ein und demselben zentralen Flansch (13) des Gehäuses (1) das ein- oder mehrstufige Getriebe (9) oder die Antriebswelle (14) modular einsteckbar ist, um das Kegelrad (7) der Abtriebswelle (3) zu kämmen.

6. Kegelradgetriebe nach wenigstens einem der Ansprüche 1 bis 5, **dadurch gekennzeichnet, dass** das Kegelrad (7) mit einer Schulter (10) versehen ist, welchem ein Hauptlager (2.1) der Abtriebswelle (3) aufsitzt und gegenüber dem Gehäuse (1) und ggf. einem Abschlussdeckel (11) abgestützt ist.

7. Kegelradgetriebe nach wenigstens einem der Ansprüche 1 bis 6, **dadurch gekennzeichnet, dass** das Kegelrad (7) stirnseitig mit der Abtriebswelle (3) verbunden, insbesondere verschraubt ist, wobei zumindest ein Absatz (24) in Kegelrad (7) und Abtriebswelle (3) zur radialen Zentrierung vorgesehen ist.

8. Kegelradgetriebe nach Anspruch 7, **dadurch gekennzeichnet, dass** auf der Schulter (10) des Kegelrades (7) das Hauptlager (2.1) abgestützt ist.

9. Kegelradgetriebe nach wenigstens einem der Ansprüche 1 bis 8, **dadurch gekennzeichnet, dass** das Kegelrad (7) verdrehfest auf die Abtriebswelle (3) aufgesteckt und zwischen einer Schulter (10) des Kegelrades (7) und des Gehäuses (1) das Hauptlager (2.1) vorgesehen ist.

10. Kegelradgetriebe nach wenigstens einem der Ansprüche 3 bis 9, **dadurch gekennzeichnet, dass** die Abtriebswelle (3) stirnseitig einends als Abtriebsflansch (23) zum Adaptieren von beliebigen Abtriebselementen ausgebildet ist, wobei ein Hauptlager (2.1) zwischen einer Schulter (10) des Abtriebsflansches (23) und dem Gehäuse (1) zur radialen Lagerung der Abtriebswelle (3) vorgesehen ist.

11. Kegelradgetriebe nach wenigstens einem der Ansprüche 4 bis 10, **dadurch gekennzeichnet, dass** der eine Schmierraum (20.2) zwischen den ausserhalb der Hauptlager (2.1, 2.2) liegenden Dichtelementen (19) und zwischen Abtriebswelle (3) und Kegelrad (7) sowie Gehäuse (1) gebildet ist.

12. Kegelradgetriebe nach wenigstens einem der Ansprüche 4 bis 11, **dadurch gekennzeichnet, dass** der andere Schmierraum (20.1) zwischen den Dichtelementen (19) der Antriebswelle (3) und dem Antriebsflansch (23) gebildet ist.
